## Europäisches Patentamt
## European Patent Office
## Office européen des brevets

(19)

(11) Veröffentlichungsnummer: **0 291 454**
**A2**

(12) **EUROPÄISCHE PATENTANMELDUNG**

(21) Anmeldenummer: 88810284.5

(22) Anmeldetag: 04.05.88

(51) Int. Cl.⁴: **C 08 G 59/40**
C 08 G 59/18, C 09 D 3/58

(30) Priorität: 14.05.87 CH 1859/87

(43) Veröffentlichungstag der Anmeldung:
17.11.88 Patentblatt 88/46

(84) Benannte Vertragsstaaten:
**BE CH DE ES FR GB IT LI NL**

(71) Anmelder: **CIBA-GEIGY AG**
**Klybeckstrasse 141**
**CH-4002 Basel (CH)**

(72) Erfinder: **Schneider, Wolfgang**
**Liebrütistrasse 24.141**
**CH-4303 Kaiseraugst (CH)**

**Amsler, Kurt**
**Leimenstrasse 78/2**
**CH-4051 Basel (CH)**

Patentansprüche für folgenden Vertragsstaat: ES.

(54) **Ausgewählte Phosphorsäureester als Härter für Epoxidharze.**

(57) Die vorliegende Erfindung betrifft härtbare Gemische enthaltend

    i) einen Polyglycidylether oder -ester auf Basis eines aliphatischen, cycloaliphatischen oder aromatischen Alkohols oder einer entsprechenden Carbonsäure und

    ii) einen Härter erhältlich durch Umsetzung von

    A) einem Gemisch aus 2-4 Molen eines einwertigen, aliphatischen Alkohols und 1 Mol Phosphorpentoxid in einem inerten organischen Lösungsmittel oder von 2 Molen Phosphorsäuredialkylester oder von 2 Molen Phosphorsäure gegebenenfalls in Kombination mit 1-2 Molen eines einwertigen, aliphatischen Alkohols, mit

    B) 0,5-1,5 Molen eines Diglycidylethers auf Basis eines cycloaliphatischen oder aromatischen Diols,

mit der Massgabe, dass besagter bei der Herstellung des Härters verwendeter Diglycidylether ein mittleres Molekulargewicht (Zahlenmittel) von nicht mehr als 2500 aufweist und dass besagter Härter im wesentlichen frei von 1,2-Epoxidgruppen ist.

Die härtbaren Gemische eignen sich vor allem zur Herstellung von Beschichtungen.

**Beschreibung**

### Ausgewählte Phosphorsäureester als Härter für Epoxidharze

Die vorliegende Erfindung betrifft härtbare Epoxidgemische enthaltend bestimmte Phosphorsäureester als Härter, ausgewählte Phosphorsäureester, die gehärteten Produkte, sowie die Verwendung der härtbaren Gemische zur Herstellung von Beschichtungen.

Aus dem DE-Patent 875,725 sind härtbare Gemische aus Diglycidylethern von Bisphenol A und Phosphorsäure als Härter bekannt. Die Mischungen eignen sich zu Herstellung von Beschichtungen und zeichnen sich durch eine hohe Haftfestigkeit, insbesondere auf Eisenmetallen, aus. Ferner weisen sie eine gute Chemikalienbeständigkeit und eine gute Flexibilität auf.

Aus dem US-Patent 4,289,812 sind wasserlösliche oder wasserdispergierbare Verbindungen bekannt, die sich durch Umsetzung von Epoxidharzen, insbesondere von Diglycidylethern auf Bisphenol Basis, mit Phosphorsäure oder kondensierten Phosphorsäuren, wie Pyrophosphorsäure, gefolgt von anschliessender Neutralisierung erhalten lassen.

Die wasserlöslichen Harze lassen sich über die P-OH Gruppen vernetzen. Als Härter verwendet man beispielsweise Harnstoffe, Melamin-oder Phenolharze. Bevorzugtes Einsatzgebiet dieser Formulierungen ist die Herstellung von Beschichtungen.

Das US-Patent 4,397,970 beschreibt eine Weiterentwicklung des vorangehend beschriebenen Gegenstandes. Dabei handelt es sich um ein Verfahren zur Herstellung von wasserlöslichen oder wasserdispergierbaren Verbindungen, wie oben beschrieben, bei dem als Phosphorquelle Phosphorpentoxid eingesetzt wird.

Aus keiner dieser Patentschriften ist jedoch ersichtlich, dass man Addukte von Phosphorsäure(derivaten) an Epoxidharze als Epoxidhärter einsetzen kann.

Durch den Einsatz von Addukten lässt sich das Mischungsverhältnis zwischen dem Epoxidharz und dem Härter in der Regel günstiger, d.h. näher bei 1:1, einstellen. Dadurch werden Dosieren und Mischen beider Komponenten einfacher. Ausserdem lassen sich verschiedene Eigenschaften der härtbaren Mischung, wie Viskosität oder Feststoffgehalt, oder des gehärteten Produktes, wie dessen Flexibilität, durch gezielte Auswahl der Komponenten bei der Herstellung des Härters variieren.

Es wurde jetzt eine ausgewählte Klasse von Addukten von Phosphorsäure(derivaten) an bestimmte Epoxidharze gefunden, die sich als Härter für Epoxidharze eignen. Durch Härtung von Epoxidharzen enthaltend diese Härter lassen sich Beschichtungen mit ausgezeichneten Eigenschaften herstellen.

Die vorliegende Erfindung betrifft ein härtbares Gemisch enthaltend

i) einen Polyglycidylether oder -ester auf Basis eines aliphatischen, cycloaliphatischen oder aromatischen Alkohols oder einer entsprechenden Carbonsäure und

ii) einen Härter erhältlich durch Umsetzung von

A) einem Gemisch aus 2-4 Molen eines einwertigen, aliphatischen Alkohols und 1 Mol Phosphorpentoxid in einem inerten organischen Lösungsmittel oder von

2 Molen Phosphorsäuredialkylester oder von

2 Molen Phosphorsäure, gegebenenfalls in Kombination mit 1-2 Molen eines einwertigen, aliphatischen Alkohols, mit

B) 0,5-1,5 Molen eines Diglycidylethers auf Basis eines cycloaliphatischen oder aromatischen Diols,

mit der Massgabe, dass besagter bei der Herstellung des Härters verwendeter Diglycidylether ein mittleres Molekulargewicht (Zahlenmittel) von nicht mehr als 2500 aufweist und dass besagter Härter im wesentlichen frei von 1,2-Epoxidgruppen ist.

Komponente i) ist vorzugsweise ein Polyglycidylether, besonders bevorzugt ein Diglycidylether. Beispiele für Verbindungen dieses Typs sind Polyglycidyl- oder Poly-($\beta$-methylglycidyl)-ether erhältlich durch Umsetzung einer Verbindung mit mindestens zwei freien alkoholischen Hydroxylgruppen und/oder phenolischen Hydroxylgruppen und einem geeignet substituierten Epichlorhydrin unter alkalischen Bedingungen, oder in Anwesenheit eines sauren Katalysators und anschliessender Alkalibehandlung.

Ether dieses Typs leiten sich beispielsweise ab von acyclischen Alkoholen, wie Ethylenglykol, Diethylenglykol und höheren Poly-(oxyethylen)-glykolen, Propan-1,2-diol oder Poly-(oxypropylen)-glykolen, Propan-1,3-diol, Butan-1,4-diol, Poly-(oxytetramethylen)-glykolen, Pentan-1,5-diol, Hexan-1,6-diol, Hexan-2,4,6-triol, Glycerin, 1,1,1-Trimethylolpropan, Pentaerythrit, Sorbit, sowie von Polyepichlorhydrinen.

Sie leiten sich aber auch beispielsweise ab von cycloaliphatischen Alkoholen wie 1,3- oder 1,4-Dihydroxycyclohexan, Bis-(4-hydroxycyclohexyl)-methan, 2,2-Bis(4-hydroxycyclohexyl)-propan oder 1,1-Bis-(hydroxymethyl)-cyclohex-3-en oder sie besitzen aromatische Kerne wie N,N-Bis-(2-hydroxyethyl)-anilin oder p,p'-Bis-(2-hydroxyethylamino)-diphenylmethan.

Die Polyglycidylether in Komponente i) können sich auch von einkernigen Phenolen ableiten, wie beispielsweise von Resorcin oder Hydrochinon; oder sie basieren auf mehrkernigen Phenolen, wie beispielsweise auf Bis-(4-hydroxyphenyl)-methan, 4,4'-Dihydroxydiphenyl, Bis-(4-hydroxyphenyl)-sulfon, 1,1,2,2-Tetrakis-(4-hydroxyphenyl)-ethan, 2,2-Bis-(4-hydroxyphenyl)-propan, 2,2-Bis-(3,5-dibrom-hydroxyphenyl)-propan sowie auf Novolaken erhältlich durch Kondensation von Aldehyden, wie beispielsweise Formaldehyd, Acetaldehyd, Chloral oder Furfuraldehyd mit Phenolen wie Phenol, oder mit Phenolen, die im Kern mit Chloratomen oder $C_1$-$C_9$Alkyl gruppen substituiet sind, wie beispielsweise 4-Chlorphenol, 2-Methylphenol oder 4-tert.Butylphenol oder erhältlich durch Kondensation mit Bisphenolen, so wie oben beschrieben.

Komponente i) kann auch ein Polyglycidylester sein. Beispiele für Verbindungen dieses Typs sind Polyglycidyl- und Poly-(β-methylglycidyl)-ester erhältlich durch Umsetzung einer Verbindung mit mindestens zwei Carboxylgruppen im Molekül und Epichlorhydrin bzw. Glyzerindichlorhydrin bzw. β-Methyl-epichlorhydrin. Die Umsetzung erfolgt zweckmässig in der Gegenwart von Basen.

Als Verbindung mit mindestens zwei Carboxylgruppen im Molekül können aliphatische Polycarbonsäuren verwendet werden. Beispiele für diese Polycarbonsäuren sind Oxalsäure, Bernsteinsäure, Glutarsäure, Adipinsäure, Pimelinsäure, Korksäure, Azelainsäure, Sebazinsäure oder dimerisierte bzw. trimerisierte Linolsäure.

Es können aber auch cycloaliphatische Polycarbonsäuren eingesetzt werden, wie beispielsweise Tetrahydrophthalsäure, 4-Methyltetrahydrophthalsäure, Hexahydrophthalsäure oder 4-Methylhexahydrophthalsäure.

Weiterhin können aromatische Polycarbonsäuren Verwendung finden, wie beispielsweise Phthalsäure, Isophthalsäure oder Terephthalsäure.

Selbstverständlich können als Komponente i) auch Mischungen der oben definierten Epoxidverbindungen eingesetzt werden.

Zur Herstellung der Komponente ii) setzt man eine geeignete Phosphorquelle mit bestimmten Diglycidylethern um. Dabei werden Mengen und Umsetzungsbedingungen so gewählt, dass die 1,2-Epoxidgruppen des Diglycidylethers durch die Reaktion im wesentlichen verbraucht werden.

Die Diglycidyletherkomponente darf ein mittleres Molekulargewicht von 2500 nicht überschreiten, da ansonsten mit Nebenreaktionen gerechnet werden muss, die in der Regel zu einer zu starken Vernetzung der Diglycidyletherkomponente und zu einem für die Härtungsreaktion ungeeigneten Produkt führen.

Die Umsetzung zum Härter soll in erster Linie zwischen den 1,2-Epoxidgruppen und den freien OH-Gruppen der Phosphorsäure bzw. des Phosphorsäurederivates erfolgen. Die Reaktion zwischen den freien OH-Gruppen der Phosphorkomponente und übrigen reaktiven Gruppen in der Diglycidyletherkomponente, beispielsweise sekundären Alkoholgruppen, kann in der Regel durch Auswahl der Mengen der Reaktionskomponenten gesteuert werden. Für das Reaktionsprodukt kann keine eindeutige Strukturformel angegeben werden, da neben der Verkappung der endständigen Epoxidgruppen wahrscheinlich auch in geringem Ausmass Nebenreaktionen an weiteren reaktiven Gruppen der Diglycidyletherkomponente ablaufen können. Ferner kann eine teilweise Cyclisierung der Phosphorsäureestergruppen mit benachbarten sekundären OH-Gruppen ablaufen. Auch kann ein Teil der Alkylgruppen eines eingesetzten Phosphorsäureesters verseift werden.

Im allgemeinen sollen pro freie OH-Gruppe der Phosphorsäurekomponente 0,5-1,5, vorzugsweise 0,5-1,0, freie 1,2-Epoxidgruppen der Diglycidyletherkomponente vorgelegt werden.

Als Phosphorkomponente wählt man beispielsweise

A1) ein Gemisch aus 2-4 Molen, vorzugsweise 2-3 Molen, eines einwertigen aliphatischen Alkohols und 1 Mol Phosphorpentoxid in einem inerten organischen Lösungsmittel. Dabei legt man vorzugsweise den Alkohol im Lösungsmittel vor und gibt das Phosphorpentoxid portionenweise zu, so dass die entstehende Reaktionswärme abgeführt wird.

Als Alkohole für Komponente A eignen sich einwertige primäre, sekundäre und tertiäre aliphatische Alkohole, insbesondere die primären Alkohole und davon insbesondere die $C_1$-$C_8$-Alkohole.

Besonders bevorzugt eignen sich Methanol, Ethanol, n-Propanol, n-Butanol und n-Hexanol, ganz besonders jedoch n-Butanol.

Als organisches Lösungsmittel eignen sich diejenigen Verbindungen, die unter den Umsetzungsbedingungen inert sind und die zumindest den Alkohol und das Umsetzungsprodukt mit Phosphorpentoxid zu lösen vermögen.

Beispiele dafür sind aromatische Kohlenwasserstoffe, wie Toluol, Xylol oder Ethylbenzol, sowie aliphatische Ketone, wie Aceton oder Methylethylketon, oder Ester, wie Butylacetat oder Methoxypropylacetat.

Ferner kann man als Phosphorkomponente A2) Phosphorsäuredialkylester wählen. Dabei handelt es sich in der Regel um Ester mit $C_1$-$C_8$-aliphatischen, primären Alkoholen, insbesondere um den Dimethylester, Diethylester, Di-n-propylester und ganz besonders bevorzugt um den Di-n-butylester.

Der Ester wird als solcher eingesetzt oder in einem inerten, organischen Lösungsmittel vorgelegt. Dabei kann es sich um eines der oben erwähnten Lösungsmittel handeln. In der Regel wählt man die Menge des Dialkylesters so, dass auf eine freie OH-Gruppe des Esters 0,5-1,5, vorzugsweise 0,5-1,0, freie 1,2-Epoxidgruppen der Diglycidyletherkomponente kommen.

Als Phosphorkomponente kann man auch A3) Phosphorsäure einsetzen. Diese kann entweder als solche verwendet werden oder gelöst in einem inerten, organischen Lösungsmittel, wie oben definiert vorgelegt werden.

Auch hier verwendet man zweckmässigerweise 0,5-1,5, vorzugsweise 0,5-1,0, freie 1,2-Epoxidgruppen auf die erste freie OH-Gruppe der Phosphorsäure. Die verbleibenden 2 freien OH-Gruppen der Phosphorsäure sind unter den Reaktionsbedingungen weniger reaktiv und stehen für die Härtungsreaktion zur Verfügung.

Die Phosphorsäure kann auch in Kombination mit einem aliphatischen Alkohol, vorzugsweise mit n-Butanol, vorgelegt werden. Die Menge an Alkohol wählt man zweckmässigerweise so, dass auf 1 Mol Phosphorsäure 1-2 Mole Alkohol kommen.

Bei den Diglyidylethern eines cycloaliphatischen oder aromatischen Diols zur Herstellung der Komponente ii) handelt es sich vorzugsweise um die weiter oben für die Komponente i) aufgezählten cycloaliphatischen oder aromatischen Diglycidylether, solange deren mittleres Molekulargewicht 2500, vorzugsweise 1800, nicht übersteigt.

Vorzugsweise wählt man Diglycidylether auf Basis von Bisphenol A mit einem mittleren Molekulargewicht zwischen 350 und 1800, insbesondere zwischen 350 und 1500.

Die Umsetzung zwischen Phosphorsäurekomponente und Diglycidylether wird zweckmässigerweise bei erhöhter Temperatur vorgenommen. Dazu tropft man die Epoxidkomponente in der Regel zur gelösten Phosphorverbindung und lässt die Reaktion bis zum vollständigen Verbrauch der Epoxidgruppen ablaufen.

Feste Epoxidkomponenten löst man zweckmässigerweise vorher in einem inerten, organischen Lösungsmittel, beispielsweise in einer der weiter oben aufgezählten Verbindungen.

Die Reaktionstemperatur beträgt in der Regel 60-150°C, vorzugsweise 100-120°C.

Die Reaktion kann auch unter Schutzgas, beispielsweise unter Stickstoff, durchgeführt werden.

Das Umsetzungsprodukt besitzt in der Regel ein mittleres Molekulargewicht in der Grössenordnung des eingesetzten Diglycidylethers; in der Regel liegt dieses nicht oberhalb von 2800 (Zahlenmittel). Bevorzugte Produkte besitzen mittlere Molekulargewichte (Zahlenmittel) von 500 bis 1800, insbesondere von 500 bis 1500.

Die Säurezahl der Härterkomponente ii) ist erstaunlich niedrig und liegt in der Regel zwischen 20 und 200 mg KOH/g, vorzugsweise zwischen 30 und 150 mg KOH/g. Ueberraschenderweise ist die Reaktivität dieser Härter recht hoch, so dass auch ohne übliche Reaktionsbeschleuniger gearbeitet werden kann. Man kann die Geschwindigkeit der Härtungsreaktion selbstverständlich durch Zugabe von Beschleunigern noch erhöhen.

Die Erfindung betrifft auch die Verwendung der Verbindungen ii) wie oben definiert als Härter für Epoxidharze.

Bevorzugt werden Komponenten ii), worin der Diglycidylether zur Herstellung des Härters ein Diglycidylether auf Bisphenol-A oder Bisphenol-F Basis, bevorzugt auf Bisphenol-A Basis, ist oder ein Diglycidylether auf Basis von hydriertem Bisphenol-A oder hydriertem Bisphenol F, vorzugsweise auf Basis von hydriertem Bisphenol-A.

Ganz besonders bevorzugt werden härtbare Gemische, wie oben definiert, worin der Diglycidylether zur Herstellung von Komponente ii) ein Diglycidylether auf Bisphenol-A Basis mit einem mittleren Molekulargewicht (Zahlenmittel) von 350-1800 oder ein Diglycidylether auf Basis eines hydrierten Bisphenols-A ist.

Ebenfalls bevorzugte härtbare Gemische enthalten i) einen Diglycidylether auf Bisphenol-A oder Bisphenol-F Basis, besonders bevorzugt einen Diglycidylether auf Bisphenol-A Basis, und ganz besonders bevorzugt einen Diglycidylether auf Bisphenol-A Basis mit einer Molmasse von mehr als 1500, und ii) einen Härter, wie oben definiert, der durch Umsetzung mit einem Diglycidylether auf Bisphenol-A Basis erhältlich ist.

Die gehärteten Produkte aus Gemischen dieses Typs zeichnen sich durch eine besondere gute Chemikalienbeständigkeit aus und ergeben Beschichtungen mit einer guten Flexibilität. Sie lassen sich besonders auf dem Beschichtungssektor einsetzen und eignen sich insbesondere für die Beschichtung von Lebensmittelbehältern. Die Erfindung betrifft auch die Verwendung dieser Gemische für diesen Zweck.

Weitere bevorzugte härtbare Gemische enthalten i) einen Polyglycidylether auf Basis eines aliphatischen Alkohols oder einen Diglycidylether auf Basis eines hydrierten Bisphenols-A oder hydrierten Bisphenols-F, insbesondere einen Diglycidylether auf Basis eines hydrierten Bisphenols-A oder den Tetraglycidylether von Bis-trimethylolpropan, und ii) einen Härter, wie oben definiert, der durch Umsetzung mit einem Diglycidylether auf Basis eines hydrierten Bisphenols-A erhältlich ist.

Gehärtete Produkte aus Gemischen dieses Typs zeichnen sich durch eine besondere gute Farbstabilität und Wetterbeständigkeit aus und lassen sich daher besonders bevorzugt auf dem Beschichtungssektor einsetzen.

Die Erfindung betrifft daher auch die Verwendung der erfindungsgemässen Gemische und insbesondere die Gemische des zuletzt definierten Typs zur Herstellung von Beschichtungen.

Die Verbindungen erhältlich durch Umsetzung von Kombinationen von aliphatischem Alkohol, Phosphorpentoxid und Diglycidylether oder von Dialkylphosphat und Diglycidylether, wie oben definiert, sind neu und ebenfalls Gegenstand der vorliegenden Erfindung.

Den erfindungsgemässen härtbaren Gemischen können auch weitere übliche Zusatzstoffe und/oder Härtungsbeschleuniger zugesetzt werden.

Beispiele für weitere übliche Zusatzstoffe sind Streck-, Füll- und Verstärkungsmittel, wie beispielsweise mineralische Silikate, Glimmer, Bentonite, Kaolin oder Kieselsäureaerogel, ferner Pigmente und Farbstoffe, wie Russ, Oxidfarben oder Titandioxid, geeignete Weichmacher, wie Phthalate, insbesondere Dibutylphthalat, Adipate, Sebacate oder Citrate, Thixotropiemittel oder Verlaufmittel ("flow control agents"), wie Silicone, Wachse oder Stearate.

Solche Zusatzstoffe können den härtbaren Gemischen in irgendeiner Phase vor der Härtung zugesetzt werden.

Beispiele für Härtungsbeschleuniger sind: tertiäre Amine, deren Salze oder quaternäre Ammoniumverbindungen, z.B. Benzyldimethylamin, 2,4,6-Tris(dimethylaminomethyl)phenol, 1-Methylimidazol, 2-Ethyl-4-methylimidazol, 4-Aminopyridin, Tripentylammoniumphenolat oder Tetramethylammoniumchlorid; oder Sn-Verbindungen, wie z.B. Dibutylzinndilaurat oder Zinnoctoat.

Die Herstellung der erfindungsgemässen härtbaren Mischungen kann in üblicher Weise mit Hilfe bekannter Mischaggregate (Rührer oder Walzen) erfolgen.

Die erfindungsgemässen härtbaren Epoxidharzmischungen finden ihren Einsatz vor allem auf dem Gebieten

4

des Oberflächenschutzes und der Klebetechnik. Sie können in jeweils dem speziellen Anwendungszweck angepasster Formulierung, im ungefüllten oder gefüllten Zustand, als Lacke, Klebstoffe und Spachtelmassen verwendet werden.

Besonders bevorzugtes Einsatzgebiet ist der Oberflächenschutz.

Die Härtung der erfindungsgemässen Mischungen wird zweckmässig im Temperaturintervall von 50°C bis 300°C, bevorzugt von 200-250°C, durchgeführt.

Der Ausdruck "Härten", wie er hier gebraucht wird, bedeutet die Umwandlung der löslichen, entweder flüssigen oder schmelzbaren härtbaren Gemische in feste, unlösliche und unschmelzbare, dreidimensional vernetzte Produkte in der Form von Beschichtungen, Lackfilmen und Verklebungen. Die Erfindung betrifft auch die durch Erhitzen der oben definierten Mischungen enthaltend Komponenten i) und ii) gehärteten Produkte.

Die folgenden Beispiele erläutern die Erfindung.

Beispiele:

In den Beispielen werden folgende Epoxidharze eingesetzt:

Harz I:

Diglycidylether auf Basis von hydriertem Bisphenol A; Epoxidgehalt: 4,4 - 4,8 Aequ./kg; Viskosität: 2000 - 3000 mPas bei 25°C, gemessen mit dem Hoeppler Viskosimeter; Molekulargewicht (Zahlenmittel): 424.

Harz II:

Technischer Diglycidylether auf Bisphenol A Basis; Epoxidgehalt: 5,2 - 5,4 Aequ./kg; Viskosität: 12000 - 16000 mPas bei 25°C, gemessen mit dem Hoeppler Viskosimeter; Molekulargewicht (Zahlenmittel): 375.

Harz III:

Fester Diglycidylether auf Bisphenol A Basis; Epoxidgehalt: 1,9 - 2,0 Aequ./kg; Viskosität: 200 - 250 mPas bei 25°C, gemessen als 40%ige Lösung in n-Butylcarbitol; Molekulargewicht (Zahlenmittel): 1000.

Harz IV:

Fester Diglycidylether auf Bisphenol A Basis; Epoxidgehalt: 1,12 - 1,20 Aequ./kg; Viskositat: 550 - 700 mPas bei 25°C, gemessen als 40%ige Lösung in n-Butylcarbitol; Molekulargewicht (Zahlenmittel): 1710.

Harz V:

Polyglycidylether von Pentaerithrit; Epoxidgehalt: 6,0 - 6,5 Aequ./kg; Viskosität: 200 - 500 mPas bei 25°C, gemessen mit dem Hoeppler Viskosimeter.

Allgemeine Arbeitsvorschrift zur Herstellung der Epoxidhärter aus Phosphorpentoxid

Butanol und Butylacetat werden bei Raumtemperatur vorgelegt. Dann wird langsam portionenweise $P_2O_5$ zugesetzt, das sich unter Rühren löst. Man heizt auf ca. 70°C auf und setzt dann das entsprechende Epoxidharz über einen Tropftrichter zu. Festharze (z.B. Harz IV) werden vorgängig in Butylacetat (50%ig) gelöst. Man lässt bei 100-120°C während 30 Minuten reagieren, kühlt ab und lädt aus.

Die Einzelheiten der Herstellung der unterschiedlichen Epoxidhärter findet man in Tabelle I.

Tabelle 1: Herstellung von Phosphorsäureestern als Härter für Epoxidharze (ausgehend von P$_2$O$_5$)

| Härter Nr. | | 1 | 2 | 3 | 4 | 5 | 6 | 7 | 8 |
|---|---|---|---|---|---|---|---|---|---|
| Phosphorpentoxid | (Mol) | 1 | 1 | 1 | 1 | 1 | 1 | 1 | 1 |
| Butanol | (Mol) | 2 | 3 | 2 | 3 | 2 | 3 | 2 | 3 |
| Butylacetat | (g) | 418 | 344 | 369 | 295 | 994 | 920 | 1704 | 1630 |
| Harz I | (Mol) | 1 | 1 | | | | | | |
| Harz II | (Mol) | | | 1 | 1 | | | | |
| Harz III | (Mol) | | | | | 1 | 1 | | |
| Harz IV | (Mol) | | | | | | | 1 | 1 |
| Säurezahl mg KOH/g | | 73 | 77 | 71 | 80 | 41 | 43 | 29 | 29 |
| Viskosität b. 25°C (mPas)[1] | | 600 | 300 | 1200 | 650 | 2250 | 1500 | 2700 | 2300 |
| Festkörpergehalt (%) | | 63 | 70 | 64 | 71 | 56 | 60 | 54 | 56 |

[1] gemessen mit dem Hoeppler-Viskosimeter

Allgemeine Arbeitsvorschrift zur Herstellung der Epoxidhärter aus Phosphorsäure bzw. Phosphorsäureestern
Man legt die betreffende Phosphorverbindung als 50%ige Lösung in Butanol, in Butylacetat oder in Methylethylketon vor und setzt das betreffende Epoxidharz bei 70°C durch Zutropfen zu. Man lässt bei 100-120°C während 30 Minuten reagieren, kühlt ab und lädt aus.
Die Einzelheiten der Herstellung der unterschiedlichen Epoxidhärter findet man in Tabelle 2.

Tabelle 2: Herstellung von Phosphorsäureestern als Härter für Epoxidharze (ausgehend von Phosphorsäure oder Phosphorsäureestern)

| Härter Nr. | 9 | 10 | 11 | 12 |
|---|---|---|---|---|
| Phosphorsäure(derivate) (Mol)[2] | $H_3PO_4$ (2) | $H_3PO_4$ (2) | $H_3PO_4$ (2) | $(C_4H_9O)_2P(O)(OH)$ (2) |
| Lösungsmittel | Butanol | MEK[3] | MEK[3] | Butylacetat |
| Epoxidharz (Mol) | II (1) | II (1) | IV (1) | II (1) |
| Säurezahl mg KOH/g | 138 | 149 | 45 | 75 |
| Viskosität b. 25°C (mPas)[1] | 310 | 210 | 760 | 300 |

[1] gemessen mit dem Hoeppler Viskosimeter
[2] bezogen auf 1 Mol Epoxidharz (= 2 Mol Epoxidgruppen)
[3] Methylethylketon

Herstellung von härtbaren Epoxidgemischen enthaltend Phosphorsäureester als Härter

Man stellt Lackschichten aus Epoxidformulierungen gemäss Tabellen 3 und 4 her und härtet diese 20 Minuten bei 180°C. Als Substrate dienen jeweils Stahlbleche.

Die gehärteten Proben werden folgende Tests unterworfen:

Pendelhärte nach Persoz: gemäss franz. Norm AFNOR NFT 30 016. Die Messung erfolgt mit einem Gerät des Typs 300 der Fa. Erichsen.

Erichsentest: gemäss DIN 53156.

Schlagtest: Man lässt bei 20°C und 65 % rel. Luftfeuchtigkeit einen 1 kg schweren Bolzen (Durchm. der aufschl. Halbkugel: 2 cm) von der Lackseite her auf eine beschichtete Platte (Filmdicke: 40-50 µm) fallen, wodurch eine Beule entsteht. Man ermittelt diejenige Aufprallenergie (Fallhöhe des Bolzens), bei der die Lackschicht gerade noch intakt ist.

Rückwärtiger Schlagtest: Dieser Test entspricht im wesentlichen dem Schlagtest; nur wird hier der Bolzen von der Rückseite auf die Probeplatte fallen gelassen.

Dornbiegetest: Eine beschichtete Platte wird von der Lackrückseite her bei Raumtemperatur über einen Dorn von 8 mm Durchmesser gebogen. Es wird derjenige Biegewinkel ermittelt, bis zu dem die Lackschicht intakt bleibt. Einem Winkel von 180° entspricht ein völliges Umbiegen der Probeplatte.

Gitterschnitt: gemäss DIN 53 151 mit Einschneidegerät A.

Acetonreibtest: Eine Lackoberfläche wird je 10 Mal in beiden Richtungen mit einem acetongetränkten Wattebausch abgewischt. Anschliessend wird die Güte der Oberfläche visuell beurteilt und nach einer Skala von 0-5 bewertet. 0 bedeutet eine nicht angegriffene Schicht; 5 bedeutet ein völliges Weglösen der Schicht.

Tabelle 3: Herstellung und Untersuchung gehärteter Epoxidformulierungen enthaltend Phosphorsäureester als Härter

| Beispiel Nr. | | I | II | III | IV | V | VI | VII | VIII | IX |
|---|---|---|---|---|---|---|---|---|---|---|
| Harz V | (g) | 100 | 100 | | | | | | | |
| Harz I | (g) | | | 100 | | | | | | |
| Harz IV[1] | (g) | | | | 100 | 100 | 100 | 100 | 100 | 100 |
| Härter Nr. | | 1 | 2 | 1 | 3 | 4 | 5 | 6 | 7 | 8 |
| | (g) | (550) | (520) | (350) | (54) | (48) | (92) | (87) | (130) | (130) |
| Härte nach Persoz | (S) | 70 | 100 | 180 | 390 | 390 | 390 | 390 | 390 | 380 |
| Erichsentest | (mm) | 10 | 9 | 9 | 8 | 9 | 9 | 9 | 9 | 9 |
| Schlagtest | (cm) | 90 | 90 | 90 | 90 | 90 | 90 | 90 | 90 | 90 |
| Rückwärtiger Schlagtest | (cm) | 90 | 90 | 20 | 90 | 90 | 90 | 90 | 90 | 90 |
| Dornbiegetest | (∢) | 180 | 180 | 180 | 180 | 180 | 180 | 180 | 180 | 180 |
| Gitterschnitt 1 mm | (Gt) | 0 | 0 | 0 | 4 | 0 | 0 | 0 | 0 | 0 |
| Acetonreibtest | (20x) | 0 | 0 | 2 | 0 | 0 | 1 | 1 | 2 | 2 |

[1] Mengenangabe bezieht sich auf die 50%ige Lösung in Butylacetat.

Tabelle 4: Herstellung von härtbaren Epoxidformulierungen enthaltend Phosphorsäureester als Härter

| Beispiel Nr. | X | XI | XII | XIII |
|---|---|---|---|---|
| Harz IV[1] (g) | 100 | 100 | 100 | 100 |
| Härter Nr. (g) | 9 (24) | 10 (21) | 11 (72) | 12 (43) |
| Härter nach Persoz (sec) | 395 | 380 | 395 | 400 |
| Erichsentest (mm) | 8,8 | 9,2 | 9,5 | 8,8 |
| Schlagtest (cm) | 90 | 90 | 90 | 90 |
| Rückw. Schlagtest (cm) | 90 | 90 | 90 | 90 |
| Dornbiegetest (∢) | 180 | 180 | 180 | 180 |
| Gitterschnitt 1 mm (Gt) | 0 | 0 | 0 | 0 |
| Acetonreibtest (20x) | 1 | 1 | 1 | 1 |

[1]) Mengenangabe bezieht sich auf die 50%ige Lösung in Butylacetat.

**Patentansprüche**

1. Härtbares Gemisch enthaltend
   i) einen Polyglycidylether oder -ester auf Basis eines aliphatischen, cycloaliphatischen oder aromatischen Alkohols oder einer entsprechenden Carbonsäure und
   ii) einen Härter erhältlich durch Umsetzung von
      A) einem Gemisch aus 2-4 Molen eines einwertigen, aliphatischen Alkohols und 1 Mol Phosphorpentoxid in einem inerten organischen Lösungsmittel oder von
      2 Molen Phosphorsäuredialkylester oder von
      2 Molen Phosphorsäure gegebenenfalls in Kombination mit 1-2 Molen eines einwertigen, aliphatischen Alkohols, mit
      B) 0,5-1,5 Molen eines Diglycidylethers auf Basis eines cycloaliphatischen oder aromatischen Diols,
   mit der Massgabe, dass besagter bei der Herstellung des Härters verwendeter Diglycidylether ein mittleres Molekulargewicht (Zahlenmittel) von nicht mehr als 2500 aufweist und dass besagter Härter im wesentlichen frei von 1,2-Epoxidgruppen ist.
2. Härtbares Gemisch gemäss Anspruch 1, worin der einwertige, aliphatische Alkohol n-Butanol ist.
3. Härtbares Gemisch gemäss Anspruch 1, worin der Diglycidylether zur Herstellung des Härters ii) ein Diglycidylether auf Bisphenol-A oder Bisphenol-F Basis ist.
4. Härtbares Gemisch gemäss Anspruch 1, worin der Diglycidylether zur Herstellung des Härters ii) ein Diglycidylether auf Basis von hydriertem Bisphenol-A oder Bisphenol-F ist.
5. Härtbares Gemisch gemäss Anspruch 1, worin der Diglycidylether zur Herstellung von Komponente ii) ein Diglycidylether auf Bisphenol-A Basis mit einem mittleren Molekulargewicht (Zahlenmittel) von 350-1800 oder ein Diglycidylether auf Basis eines hydrierten Bisphenols-A ist.
6. Härtbares Gemisch gemäss Anspruch 1 enthaltend
   i) einen Diglycidylether auf Bisphenol-A oder Bisphenol-F Basis und
   ii) einen Härter, der durch Umsetzung mit einem Diglycidylether auf Bisphenol-A Basis erhältlich ist.
7. Härtbares Gemisch gemäss Anspruch 1 enthaltend
   i) einen Polyglycidylether auf Basis eines aliphatischen Alkohols oder eines Diglycidylethers auf Basis eines hydrierten Bisphenols-A oder hydrierten Bisphenols-F und

ii) einen Härter, der durch Umsetzung mit einem Diglycidylether auf Basis eines hydrierten Bisphenols-A erhältlich ist.

8. Verbindung erhältlich durch Umsetzung von

A) einem Gemisch aus 2-4 Molen eines einwertigen, aliphatischen Alkohols und 1 Mol Phosphorpentoxid in einem inerten organischen Lösungsmittel oder von 2 Molen Phosphorsäuredialkylester mit

B) 0,5-1,5 Molen eines Diglycidylethers auf Basis eines cycloaliphatischen oder aromatischen Diols, mit der Massgabe, dass besagter Diglycidylether ein mittleres Molekulargewicht (Zahlenmittel) von nicht mehr als 2500 aufweist und dass besagte Verbindung im wesentlichen frei von 1,2-Epoxidgruppen ist.

9. Gehärtetes Produkt erhältlich durch Erhitzen des härtbaren Gemisches gemäss Anspruch 1.

10. Verwendung des härtbaren Gemisches gemäss Anspruch 1 zur Herstellung von Beschichtungen.

11. Verwendung des härtbaren Gemisches gemäss Anspruch 6 zur Beschichtung von Lebensmittelbehältern.

12. Verwendung der Verbindungen ii) gemäss Anspruch 1 als Härter für Epoxidharze.

**Patentansprüche für ES**

1. Härtbares Gemisch enthaltend

i) einen Polyglycidylether oder -ester auf Basis eines aliphatischen, cycloaliphatischen oder aromatischen Alkohols oder einer entsprechenden Carbonsäure und

ii) einen Härter erhältlich durch Umsetzung von

A) einem Gemisch aus 2-4 Molen eines einwertigen, aliphatischen Alkohols und 1 Mol Phosphorpentoxid in einem inerten organischen Lösungsmittel oder von

2 Molen Phosphorsäuredialkylester oder von

2 Molen Phosphorsäure gegebenenfalls in Kombination mit 1-2 Molen eines einwertigen, aliphatischen Alkohols, mit

B) 0,5-1,5 Molen eines Diglycidylethers auf Basis eines cycloaliphatischen oder aromatischen Diols,

mit der Massgabe, dass besagter bei der Herstellung des Härters verwendeter Diglycidylether ein mittleres Molekulargewicht (Zahlenmittel) von nicht mehr als 2500 aufweist und dass besagter Härter im wesentlichen frei von 1,2-Epoxidgruppen ist.

2. Härtbares Gemisch gemäss Anspruch 1, worin der einwertige, aliphatische Alkohol n-Butanol ist.

3. Härtbares Gemisch gemäss Anspruch 1, worin der Diglycidylether zur Herstellung des Härters ii) ein Diglycidylether auf Bisphenol-A oder Bisphenol-F Basis ist.

4. Härtbares Gemisch gemäss Anspruch 1, worin der Diglycidylether zur Herstellung des Härters ii) ein Diglycidylether auf Basis von hydriertem Bisphenol-A oder Bisphenol-F ist.

5. Härtbares Gemisch gemäss Anspruch 1, worin der Diglycidylether zur Herstellung von Komponente ii) ein Diglycidylether auf Bisphenol-A Basis mit einem mittleren Molekulargewicht (Zahlenmittel) von 350-1800 oder ein Diglycidylether auf Basis eines hydrierten Bisphenols-A ist.

6. Härtbares Gemisch gemäss Anspruch 1 enthaltend

i) einen Diglycidylether auf Bisphenol-A oder Bisphenol-F Basis und

ii) einen Härter, der durch Umsetzung mit einem Diglycidylether auf Bisphenol-A Basis erhältlich ist.

7. Härtbares Gemisch gemäss Anspruch 1 enthaltend

i) einen Polyglycidylether auf Basis eines aliphatischen Alkohols oder einen Diglycidylether auf Basis eines hydrierten Bisphenols-A oder hydrierten Bisphenols-F und

ii) einen Härter, der durch Umsetzung mit einem Diglycidylether auf Basis eines hydrierten Bisphenols-A erhältlich ist.

8. Verfahren zur Herstellung eines Härters ii) gemäss Anspruch 1 durch Umsetzung von

A) einem Gemisch aus 2-4 Molen eines einwertigen, aliphatischen Alkohols und 1 Mol Phosphorpentoxid in einem inerten organischen Lösungsmittel oder von 2 Molen Phosphorsäuredialkylester mit

B) 0,5-1,5 Molen eines Diglycidylethers auf Basis eines cycloaliphatischen oder aromatischen Diols, mit der Massgabe, dass besagter Diglycidylether ein mittleres Molekulargewicht (Zahlenmittel) von nicht mehr als 2500 aufweist und dass besagte Verbindung im wesentlichen frei von 1,2-Epoxidgruppen ist.

9. Verfahren zur Herstellung gehärteter Produkte, dadurch gekennzeichnet, dass man ein härtbares Gemisch gemäss Anspruch 1 bei Temperaturen von 50°C bis 300°C härtet.

10. Verwendung des härtbaren Gemisches gemäss Anspruch 1 zur Herstellung von Beschichtungen.

11. Verwendung des härtbaren Gemisches gemäss Anspruch 6 zur Beschichtung von Lebensmittelbehältern.

12. Verwendung der Verbindungen ii) gemäss Anspruch 1 als Härter für Epoxidharze.